# DEMANDE DE BREVET EUROPEEN

(11) **EP 3 599 062 A1**
(43) Date de publication de la demande: **29.01.2020**
(21) Numéro de dépôt: 19185325.8
(22) Date de dépôt: 09.07.2019
(51) Int. Cl.: B25J 5/00, B23K 37/02, B62D 57/032

(54) **ROBOT DE SOUDAGE**

(30) Priorité: 09.07.2018 FR 1856274
(71) Demandeur: IRT JULES VERNE, 44340 Bouguenais (FR)
(72) Inventeur: CHABLAT, Damien, 44240 La Chapelle sur Erdre (FR); YVAIN, Paul, 44470 Carquefou (FR)
(74) Mandataire: Ipside

(57) **Abrégé**

Robot (7) pour la réalisation d'opérations de fabrication ou de maintenance d'un navire ou d'un aéronef comprenant :
- un corps en hélice (8) comprenant un châssis (10) s'étendant entre une première extrémité et une deuxième extrémité ;
- un chariot (9) montée coulissant le long de l'axe longitudinal du châssis (10) dudit corps en hélice ; le chariot (9) comportant une plateforme (13) contenant sur une première face un support de bras robotisé (18) et sur une seconde face un plot central d'ancrage (12) ;
- un socle d'ancrage consistant en :
a- un premier patin d'ancrage (11a) monté sur la première extrémité du corps en hélice en s'érigeant sensiblement parallèlement au plot central d'ancrage ; et
b- un deuxième patin d'ancrage (11b) monté sur la deuxième extrémité du corps en hélice en s'érigeant sensiblement parallèlement au plot central d'encrage ; au moins l'un des éléments choisi parmi les patins du socle d'ancrage et le plot central d'ancrage est mobile en translation sur son axe longitudinal ;

- une unité de pilotage adaptée pour commander l'actionnement du coulissement du chariot (9), le déplacement en translation d'au moins un élément parmi les patins d'ancrage (11a, 11b) et le plot central d'ancrage (12) ;
caractérisé en ce que le plot central d'ancrage (12) est monté pivotant sur la plateforme (13) du chariot et est apte à être déplacée en rotation par un premier moteur commandé par l'unité de pilotage.

## Description

L'invention concerne un dispositif pour la soudure automatique de pièces métalliques de grande dimension, notamment mais pas exclusivement les pièces qui composent la coque des navires ou des aéronefs, et pour le contrôle visuel automatisé en vue de la détection d'éventuels défauts générés lors de l'assemblage de telles pièces métalliques. L'invention est plus particulièrement, mais non exclusivement, destinée à la réalisation d'une soudure sur la coque d'un navire, notamment au niveau des jonctions entre des tronçons de coque préfabriqués. Des problèmes similaires sont rencontrés dans le soudage de cuves, de mâts ou de conduits de grande dimension, dans l'industrie nucléaire, la pétrochimie et l'énergie éolienne, sans que ces exemples ne soient limitatifs.

La réalisation de soudures de grande longueur par des opérateurs, en particulier sur des pièces d'aéronefs ou de coques de navire de grande dimension, nécessite l'installation d'échafaudages complexes et consiste le plus souvent en des opérations périlleuses. Pour éviter le montage des échafaudages et automatiser les opérations de soudure, il est connu d'avoir recours à des robots crapahuteurs, dit « *crawler »* en anglais, qui sont aptes à se déplacer le long d'un joint à souder. De tels robots utilisent soit des câbles ou des rails installés sur la structure à souder afin de se déplacer, ou encore s'agrippent et se déplacent directement sur ladite structure au moyen de ventouses ou d'aimants, notamment des chenilles aimantées.

Parmi les robots crapahuteurs de l'art antérieurs le recours à des bras robotisés déplaçables par translation au-dessus des sous-unités - de telles sous-unités sont qualifiées de "mailles" - d'une coque de navire à souder est connu. De tels robots imposent d'installer des systèmes de rails à monter à chaque utilisation au-dessus d'une maille, l'installation de ces rails ou ponts roulants pour se déplacer entre les différentes sous-unités augmente considérablement la durée des opérations de soudure, et, impose l'usage d'une grande quantité de matériels pour la mise en oeuvre des étapes de soudure.

Les susdites mailles de coque de navire sont des éléments en relief qui intègrent une surface sensiblement plane sur laquelle sont soudés des profilés qualifiés de "plats boudins", et des éléments de structures. Les éléments de structure intègrent des éléments de renforts de la maille conformés comme des rails et qui sont qualifiés d"'hiloires" et de "barreaux", les barreaux étant positionnés sensiblement orthogonalement aux hiloires. Dans ce contexte d'autres robots crapahuteurs sont également connus qui mettent en oeuvre des organes d'accrochages permettant au robot de s'agripper aux mailles, et impliquent nécessairement que le robot se fixe de manière temporaire sur plusieurs hiloires en même temps. Un tel robot est décrit dans l'article de Namkuk Ku et al., 2010, J. Mar. Sci. Technol. 15:374-385*.* Ce type de robot est limité dans ses déplacements, car ces robots ne permettent pas d'interagir avec une seule hiloire, ou un seul barreau, de la maille traitée au moment du soudage.

La demande FR2519576 décrit un robot à pattes grimpeur, ce type de robots comporte des points d'appuis dont la conformation est peu adaptée à l'environnement de travail d'une coque de navire, et de plus le déplacement relatif de l'effecteur par rapport aux points d'appui ne permet pas toute la liberté de déplacement recherchée pour effectuer des soudures dans un environnement aux reliefs marqués.

Ces robots de l'art antérieur ne permettent pas une précision de déplacement de l'ordre de quelques millimètres. En outre, ils sont contraints dans leur déplacement et n'offrent pas toute la mobilité nécessaire pour un positionnement adéquat de la torche de soudage de l'effecteur du robot. Si l'opération de soudage est réalisée lors de chaque passe sans difficulté par un opérateur expérimenté à partir de l'analyse visuelle qu'il réalise dudit joint soudé avant et pendant la soudure et de sa dextérité manuelle, dans le cas des robots connus, la précision de positionnement de la torche de soudage et de ses mouvements par rapport au joint soudé n'est pas compatible avec la précision qu'il est possible d'atteindre avec les moyens de déplacement d'un robot crapahuteur de l'art antérieur, particulièrement lorsque ces moyens utilisent des chenilles. De plus, les tentatives selon l'art antérieur d'asservissement des mouvements de la torche au profil du cordon de soudure s'avèrent particulièrement instables ou ne donnent pas satisfaction. En effet, le profil du joint soudé évolue au cours des passes et notamment les bords du joint soudé qui s'arrondissent deviennent particulièrement difficiles à détecter. De plus, le profil du joint soudé, particulièrement entre deux passes successives, dépend de nombreux facteurs et n'est pas reproductible.

L'invention vise à résoudre les inconvénients de l'art antérieur et concerne à cette fin un robot pour la réalisation d'opérations de fabrication ou de maintenance d'un navire ou d'un aéronef, notamment pour le soudage d'unités modulaires destinées à composer la coque d'un navire, comprenant :
- un corps en hélice comprenant un châssis s'étendant entre une première extrémité et une deuxième extrémité ;
- un chariot monté coulissant le long de l'axe longitudinal du châssis dudit corps en hélice ; le chariot comportant une plateforme contenant sur une première face un support de bras robotisé et sur une seconde face un plot central d'ancrage ;
- un socle d'ancrage consistant en :
   a- un premier patin d'ancrage monté sur la première extrémité du corps en hélice en s'érigeant sensiblement parallèlement au plot central d'ancrage; et
   b- un deuxième patin d'ancrage monté sur la deuxième extrémité du corps en hélice en s'érigeant sensiblement parallèlement au plot central d'encrage; au moins l'un des éléments choisi parmi les patins du socle d'ancrage et le plot central d'ancrage est mobile en translation sur son axe longitudinal;
- une unité de pilotage adaptée pour commander l'actionnement du coulissement du chariot, le déplacement en translation d'au moins un élément parmi les patins d'ancrage et le plot central ;
dans lequel le plot central d'ancrage est monté pivotant sur la plateforme et est apte à être déplacé en rotation par un premier moteur commandé par l'unité de pilotage.

Grâce à une telle configuration, le robot selon l'invention peut se déplacer transversalement en levant et/ou en abaissant les patins ou le plot central, puis en opérant un coulissement du chariot sur le châssis du corps en hélice ; le robot est également capable d'opérer des changements de direction par la mise en rotation du corps en hélice qui vient pivoter autour de l'axe du chariot. Un tel robot peut, d'une part, rester au plus près de la zone à traiter grâce au déplacement « en crabe » des moyens d'ancrage, tout en ayant une grande liberté de mouvement conférée par le pivotement du corps en hélice relativement à l'axe du plot central d'encrage du chariot qui porte l'effecteur.

Le robot comprend avantageusement un bras robotisé monté sur le support de bras robotisé et piloté par l'unité de pilotage. Avantageusement, le bras robotisé comporte une torche de soudage en tant qu'effecteur. Un tel ensemble permet de réaliser des soudures avec une grande précision dans les déplacements, de l'ordre de quelques millimètres, c'est-à-dire avec des écarts par rapport à une trajectoire idéale d'au plus 3 mm. Le robot selon l'invention permet d'éviter de devoir souder d'un seul tenant tout un côté (ce qui est préjudiciable à la qualité des soudures qui risquent de contenir des déformations) : grâce au robot selon l'invention il est possible de pouvoir facilement séquencer les soudures sur plusieurs faces d'une pièce en alternant très souvent.

Avantageusement, le support de bras motorisé du robot selon l'invention est monté pivotant sur la plateforme du chariot et est prévu pour être déplacé en rotation par le premier moteur, ou par un deuxième moteur, commandé par l'unité de pilotage. Un organe de débrayage est avantageusement prévu pour permettre au même moteur (le premier moteur) de fonctionner à la fois pour la rotation du plot central et pour la rotation du support de bras motorisé. La motorisation sur l'axe de rotation permet au robot de compenser des erreurs de positionnement sur l'hiloire ou sur le barreau et de pouvoir changer de support, c'est-à-dire d'une hiloire vers un barreau en se positionnant à l'intersection des deux éléments. Un tel mode de réalisation implique la présence de deux systèmes pour verrouiller les axes de rotation ainsi que deux systèmes pour connaître l'orientation de l'axe de rotation par rapport à la plateforme. Alternativement, la présence du deuxième moteur dédié à la rotation du support de bras motorisé permet un fonctionnement totalement indépendant du support de bras et du plot. Cette configuration permet la mise en rotation du bras robotisé pour la réalisation de tâches de manière indépendante au déplacement en rotation opérée par l'actionnement du premier moteur, ce qui confère une grande liberté de mouvement au bras robotisé avec des possibilités de déplacement très précis et coordonnés avec l'ensemble des autres mouvements effectués par le robot. En outre, un tel robot est capable de se déplacer de manière synchronisée avec l'axe de l'outil qu'il transporte (le bras robotisé). Cela permet au robot de gagner un degré de liberté pour réaliser des soudures, le bras robotisé pouvant souder pendant que le robot se déplace. Ainsi, si l'outil possède six degrés de libertés, il faut en ajouter deux de plus, grâce à la partie de l'ensemble mue par le coulissement du chariot et le pivotement du plot central.

Avantageusement, le châssis du corps en hélice comporte au moins une barre montée glissante dans un trou traversant de la plateforme du chariot. Selon un mode de réalisation avantageux, le châssis du corps en hélice comporte deux barres montées glissantes dans deux trous traversant de la plateforme du chariot. Cette configuration consistant en un coulissement du chariot sur une (des) barre(s) longitudinale(s) du châssis est préférée, étant donné qu'elle assure un guidage précis du chariot sur le châssis du corps en hélice.

Avantageusement, le plot central d'ancrage, le premier patin d'ancrage et le deuxième patin d'ancrage comportent des aimants permanents. En cas de coupure de l'alimentation électrique, il n'y a pas de risque de chute ce qui permet d'améliorer la sécurité dans l'environnement du robot. Alternativement, les aimants peuvent être activés et désactivés par un système électrique ou pneumatique.

Avantageusement, l'unité de pilotage comporte des moyens de mémorisation et de traitement de données intégrant une cartographie des plats boudins de la coque d'un navire à souder et le robot intègre un moyen de détection de l'environnement connectés au moyen de traitement de données de l'unité de pilotage. Aussi en début de cycle de soudage, le robot est capable de reconnaître la disposition des plats boudins et les intersections entre les hiloires et les barreaux, et, ainsi identifier s'il s'agit d'une cartographie pré-enregistrée. Cela fait donc gagner un temps de démarrage et d'exécution à l'opération envisagée. Ces cartographies pré-enregistrées intègrent de préférence les hauteurs des poutres, les déplacements à effectuer, les actions à effectuer, etc. Le robot peut détecter les défauts de la maille ou reconstruire une nouvelle cartographie en cas d'écarts avec la carte pré-enregistrée. En complément avec ce qui précède, le robot peut comporter un portique de câbles pour la vidéo et/ou l'alimentation électrique prévu pour être positionné au-dessus de l'environnement de travail. Un tel portique confère une grande liberté de mouvement au robot sur toute la surface des mailles.

Avantageusement, le moyen de détection de l'environnement comporte au moins un capteur de distance placé sur au moins l'un des éléments sélectionnés parmi le plot central d'ancrage, le premier patin d'ancrage et le deuxième patin d'ancrage. De tels capteurs de distance peuvent être utilisés pour scanner l'environnement et connaître les singularités géométriques d'une maille. Le robot peut ainsi détecter les plats boudins et améliorer la location du robot vis-à-vis des cordons de soudure à réaliser.

Avantageusement, le robot comprend un inclinomètre. Un inclinomètre est ajouté sur le robot pour améliorer son positionnement dans l'espace. Les deux patins d'ancrage peuvent être actionnés en réponse à une mesure effectuée par l'inclinomètre, pour changer l'inclinaison du robot.

Avantageusement, le moyen de traitement de donnée de l'unité de pilotage est apte à créer une cartographie de l'environnement à partir des données collectées depuis le susdit moyen de détection de l'environnement.

Si des espaces sur les hiloires existent, une commande en effort des déplacements peut être mise en oeuvre pour détecter l'absence de matière.

La description détaillée qui suit présente des modes de réalisation de la présente invention, uniquement donnés à titre illustratif et qui ne doivent nullement être interprétés comme limitatifs, et leurs figures annexées parmi lesquelles :
- la figure 1 représente une vue en perspective d'une unité modulaire de construction d'un navire, appelée « maille » ;
- la figure 2 représente une vue en perspective d'une représentation schématique du robot selon l'invention ;
- la figure 3 représente une vue en perspective d'une représentation schématique du robot selon l'invention avec un bras robotisé portant un effecteur ; et
- la figure 4 représente une vue en perspective d'un mode de réalisation du robot selon l'invention.

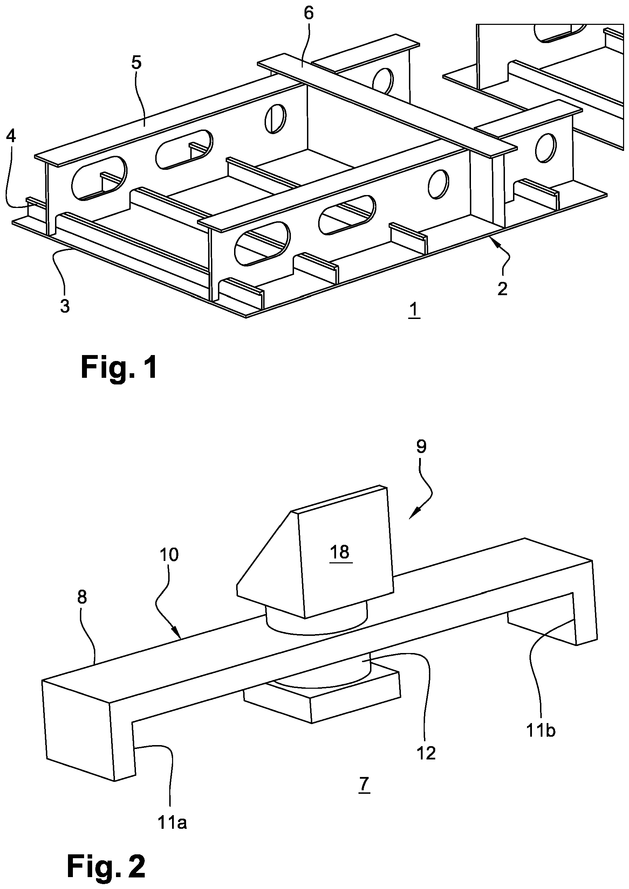

La figure 1 montre une maille 1 comprenant une tôle plane 3 sur laquelle sont fixés des plats boudins 4 métalliques à intervalles réguliers. La maille 1 comporte aussi des éléments de structure fixés sur la tôle plane 3 qui sont conformés comme des rails et qui sont des hiloires 5 fixés sensiblement perpendiculairement aux plats boudins 4, et des barreaux 6 fixés sensiblement parallèlement aux plats boudins 4.

Un robot 7 selon l'invention est représenté de manière schématique sur la figure 2, il comporte un corps en hélice 8 et un chariot 9 monté coulissant le long de l'axe longitudinal du châssis 10 du corps en hélice 8. Le corps en hélice 8 porte deux patins d'ancrage, un premier patin d'ancrage 11a et un deuxième patin d'ancrage 11b, fixés à ses extrémités. Les patins d'ancrage 11a et 11b comportent des aimants permanents qui coopèrent ensemble pour venir en appui sur la même face d'un objet tel qu'une hiloire 5 ou un barreau 6. Le chariot 9 comporte un plot central d'ancrage 12 monté pivotant sur une partie du chariot solidaire du corps en hélice dénommée plateforme 13. Le plot central d'ancrage 12 comporte un aimant permanent à son extrémité pour venir en appui sur la face d'un objet tel qu'une hiloire 5 ou un barreau 6. Les patins d'ancrage 11a et 11b sont télescopiques, ce qui permet de commander le levage du robot et de désolidariser l'aimant du plot central d'avec la face de l'objet sur lequel il est précédemment en appui. Le robot 7 comporte une unité de pilotage (non représentée) paramétrée pour ordonner l'actionnement des patins d'ancrage 11a et 11b, le pivotement du plot central d'ancrage 12 et/ou le coulissement du chariot 9 sur le châssis du corps en hélice 8.

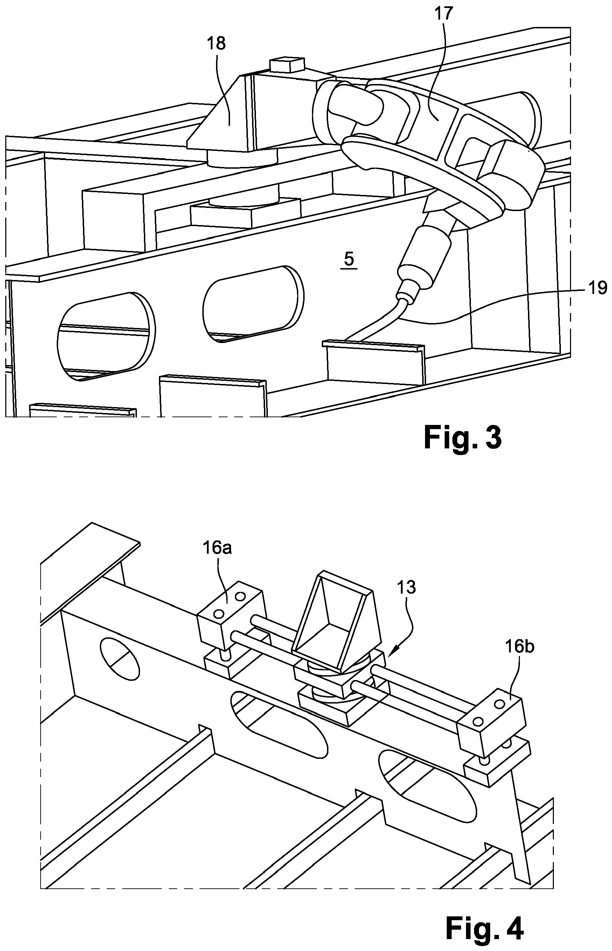

Selon un mode de réalisation avantageux montré sur la figure 4, le châssis 10 du corps en hélice 8 comportent deux barres longitudinales 14a et 14b montées coulissantes dans deux trous traversant de la plateforme 13 du chariot. Tout autre solution de montage permettant la réalisation d'une liaison glissière est possible.

Selon un mode de réalisation avantageux également montré sur la figure 4, les patins d'ancrage 11a et 11b consistent en des semelles aimantées fixés sur deux barres d'appui 15a et 15b qui sont montées coulissantes dans deux caissons 16a et 16b intégrés aux extrémités du corps en hélice. Les deux barres d'appui 15a et 15b étant montées perpendiculairement aux barres longitudinales 14a et 14b du châssis du corps en hélice. Tout autre solution de montage permettant la réalisation d'une liaison glissière est possible

La figure 3 montre le robot 7 positionné sur une hiloire 5. Le robot 7 comprend un bras robotisé 17 fixé sur un support de bras robotisé 18 intégré au chariot 9, le bras robotisé 17 comportant comme effecteur une torche de soudage 19. Le support de bras robotisé 18 est monté pivotant sur la plateforme 13 du chariot 9 et est actionné en rotation suivant les instructions de pilotage envoyées depuis l'unité de pilotage.

## Revendications

1. Robot (7) pour la réalisation d'opérations de fabrication ou de maintenance d'un navire ou d'un aéronef comprenant :
- un corps en hélice (8) comprenant un châssis (10) s'étendant entre une première extrémité et une deuxième extrémité ;
- un chariot (9) montée coulissant le long de l'axe longitudinal du châssis (10) dudit corps en hélice ; le chariot (9) comportant une plateforme (13) contenant sur une première face un support de bras robotisé (18) et sur une seconde face un plot central d'ancrage (12) ;
- un socle d'ancrage consistant en :
a- un premier patin d'ancrage (11a) monté sur la première extrémité du corps en hélice en s'érigeant sensiblement parallèlement au plot central d'ancrage (12) ; et
b- un deuxième patin d'ancrage (11b) monté sur la deuxième extrémité du corps en hélice en s'érigeant sensiblement parallèlement au plot central d'encrage (12) ; au moins l'un des éléments choisi parmi les patins du socle d'ancrage et le plot central d'ancrage est mobile en translation sur son axe longitudinal;
- une unité de pilotage adaptée pour commander l'actionnement du coulissement du chariot (9), le déplacement en translation d'au moins un élément parmi les patins d'ancrage (11a, 11b) et le plot central d'ancrage (12) ; **caractérisé en ce que** le plot central d'ancrage (12) est monté pivotant sur la plateforme (13) du chariot et est apte à être déplacée en rotation par un premier moteur commandé par l'unité de pilotage.

2. Robot (7) selon la revendication 1, dans lequel le robot comprend un bras robotisé (17) monté sur le support de bras robotisé (18) et piloté par l'unité de pilotage.

3. Robot (7) selon la revendication 2, dans lequel le bras robotisé comporte une torche de soudage (19) en tant qu'effecteur.

4. Robot selon l'une des revendications 1 à 3, dans lequel le support de bras motorisé (18) du robot est monté pivotant sur la plateforme (13) du chariot et est prévu pour être déplacé en rotation par le premier moteur, ou par un deuxième moteur, commandé par l'unité de pilotage.

5. Robot (7) selon l'une des revendications 1 à 4, dans lequel le châssis (10) du corps en hélice comporte au moins une barre longitudinale (14a, 14b) montée glissante dans un trou traversant de la plateforme (13) du chariot.

6. Robot (7) selon l'une des revendications 1 à 5, dans lequel le plot central d'ancrage (12), le premier patin d'ancrage (11a) et le deuxième patin d'ancrage (11b) comportent des aimants permanents.

7. Robot (7) selon l'une des revendications 1 à 6, dans lequel l'unité de pilotage comporte des moyens de mémorisation et de traitement de données intégrant une cartographie des plats boudins (4) de la coque d'un navire à souder et le robot intègre un moyen de détection de l'environnement connectés au moyen de traitement de données de l'unité de pilotage.

8. Robot (7) selon la revendication 7, dans lequel le moyen de détection de l'environnement comporte au moins un capteur de distance placé sur au moins l'un des éléments sélectionné parmi le plot central d'ancrage (12), le premier patin d'ancrage (11a) et le deuxième patin d'ancrage (11b).

9. Robot (7) selon l'une des revendications 7 à 8, dans lequel le robot comprend un inclinomètre.

10. Robot (7) selon l'une des revendications 7 à 9, dans laquelle le moyen de traitement de donnée de l'unité de pilotage est apte à créer une cartographie de l'environnement à partir des données collectées depuis ledit moyen de détection de l'environnement.
